(19) Europäisches Patentamt
European Patent Office
Office européen des brevets

(11) **EP 3 286 582 B1**

(12) **FASCICULE DE BREVET EUROPEEN**

(45) Date de publication et mention
de la délivrance du brevet:
**25.11.2020 Bulletin 2020/48**

(21) Numéro de dépôt: **16719295.4**

(22) Date de dépôt: **14.04.2016**

(51) Int Cl.:
*G01T 1/167* (2006.01)     *G01V 5/00* (2006.01)

(86) Numéro de dépôt international:
**PCT/EP2016/058264**

(87) Numéro de publication internationale:
**WO 2016/169836 (27.10.2016 Gazette 2016/43)**

(54) **PROCÉDÉ DE DÉTERMINATION D'ACTIVITÉ D'AU MOINS UN CORPS PRÉSENT DANS UN MATÉRIEL ET PROCÉDÉ D'IDENTIFICATION DE CORPS ET DISPOSITIFS ASSOCIÉS**

VERFAHREN UND VORRICHTUNG ZUR BESTIMMUNG DER AKTIVITÄT DES WENIGSTENS EINEN KÖRPERS ANWESEND IN EINEM WERKSTOFF UND DESSEN IDENTIFIZIERUNG

METHOD AND APPARATUS TO DETERMINE THE ACTIVITY OF AT LEAST ONE BODY PRESENT IN A MATERIAL AND TO IDENTIFY THE BODY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.04.2015 FR 1553523**

(43) Date de publication de la demande:
**28.02.2018 Bulletin 2018/09**

(73) Titulaire: **Commissariat à l'Énergie Atomique et aux Énergies Alternatives 75015 Paris (FR)**

(72) Inventeurs:
• BICHLER, Olivier
  91300 Massy (FR)
• THEVENIN, Mathieu
  91400 Saclay (FR)
• BOBIN, Christophe
  91400 Orsay (FR)

(74) Mandataire: **Brevalex 95, rue d'Amsterdam 75378 Paris Cedex 8 (FR)**

(56) Documents cités:
WO-A1-91/11009        WO-A2-2014/133687
US-A1- 2006 085 038

• PAUL E KELLER ET AL: "Nuclear Spectral Analysis via Artificial Neural Networks for Waste Handling", IEEE TRANSACTIONS ON NUCLEAR SCIENCE, vol. 42, 1 janvier 1995 (1995-01-01), XP055254412,

**Description**

Domaine technique et art antérieur

L'invention concerne un procédé de détermination d'activité d'au moins un corps présent dans un matériel, un procédé d'identification de corps ainsi que les dispositifs associés aux procédés.

Les corps à identifier sont, par exemple, des radionucléides qui émettent des rayonnements gamma (Uranium, Americium, etc.) ou des éléments chimiques qui absorbent des rayonnements infra-rouge et/ou ultra-violet.

L'invention s'applique, par exemple, à la lutte contre le terrorisme dans laquelle il est impératif de détecter et d'identifier rapidement la présence de radionucléides.

Selon l'art connu, l'identification des radionucléides dans un matériel s'effectue par spectrométrie gamma. Le spectre en énergie des émissions gamma du matériel à étudier est tout d'abord mesuré. L'identification des radionucléides résulte ensuite de la comparaison entre le spectre mesuré et étalonné en énergie et les signatures spectrales de différents radionucléides. La signature spectrale d'un radionucléide ou probabilité pour qu'un rayonnement gamma d'énergie donnée provienne d'un radionucléide est une grandeur connue disponible dans des bases de données spécifiques.

Le document intitulé « Radio-isotope identification algorithms for Nal spectra » (Algorithms, vol. 2, no. 1, pages 339-360, 2009) divulgue différentes méthodes de comparaison aptes à identifier des radionucléides (supervision d'un utilisateur, comparaison de bases de données, comparaison de régions d'intérêts avec une base de données, correspondance de formes prédéfinies, etc.).

Le document WO2014133687 divulgue un procédé et un dispositif de détermination d'activité par la construction d'un spectre dans son ensemble, puis le traitement de ce spectre à l'issue de sa construction au moyen d'un ensemble d'acquisition ou des ensembles de distributions de probabilité.

D'une manière générale, toutes ces méthodes comparent les pics d'énergie d'un spectre en énergie mesuré avec des pics d'énergie préenregistrés dans une bibliothèque de données. Il est nécessaire de disposer d'un spectre résolu, donc d'un étalonnage précis de la chaine d'acquisition.

De tels procédés présentent de nombreux inconvénients. Tout d'abord, la mesure du spectre en énergie nécessite des temps de pose importants afin de collecter suffisamment d'impulsions. Par ailleurs, les détecteurs utilisés doivent avoir une très bonne résolution.

Afin de rendre l'identification plus robuste, il est connu de l'art antérieur d'utiliser un réseau de neurones. Le document intitulé « Nuclear Spectral analysis via artificial neural networks for waste handling » (Nuclear Science, IEEE Transactions on vol.42, no.4, pages 709-715, 1995) divulgue un tel procédé.

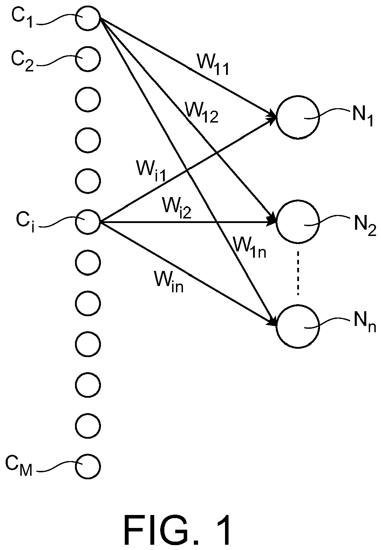

La figure 1 illustre un schéma de principe de réseau de neurones de type perceptron utilisé pour l'étude du spectre en énergie d'un matériel à étudier selon l'art antérieur.

Le réseau de neurones comprend au minimum un ensemble de M canaux d'entrée $C_i$ (i=1, 2, .... M) et une couche de n neurones de sortie $N_k$ (k=1, 2, ..., n), le nombre n étant égal au nombre d'éléments à identifier. Un tel réseau peut également comporter des couches de neurones intermédiaires (couches cachées) pour augmenter les performances du réseau. Une fois construit le spectre en énergie du matériel à étudier, l'amplitude du spectre est discrétisée sur M bandes d'énergie ou de fréquence élémentaires différentes, chaque canal $C_i$ (i=1, 2, .... M) étant associé à une bande d'énergie différente. Chaque neurone $N_k$ (k=1, 2, ..., n) de la couche de neurones est connecté à l'ensemble des canaux d'entrée $C_i$ (i=1, 2, .... M) avec un jeu de poids synaptiques $w_{ik}$ (i=1, 2, ..., M, k=1, 2, ..., n). Le poids synaptique $w_{ik}$ est le poids qui est attribué au corps $CE_k$ pour le canal d'énergie $C_i$. Le poids synaptique $w_{ik}$ est d'autant plus élevé que l'intensité émise par le corps $CE_k$ est élevée à cette énergie. Dans une approche classique, les poids synaptiques sont typiquement définis par apprentissage, par exemple en utilisant un algorithme de rétro-propagation du gradient, à partir des spectres de chaque élément à identifier.

Bien que plus robuste, cette approche ne permet pas d'identifier avec certitude les différents éléments qui composent une mixture dès lors que les spectres mesurés présentent des pics étalés. En effet, ces pics - approximés sous la forme d'une gaussienne - peuvent se situer dans une même bande d'énergie, ce qui rend alors leur discrimination quasiment impossible sans faire appel à une expertise dans le domaine.

Cette approche présente également l'inconvénient d'un temps de pose important car il est toujours nécessaire de construire le spectre étalonné en énergie du matériel à étudier. Le temps d'identification qui en résulte est donc également très important. Il n'est alors pas possible de concevoir des portiques de sécurité aptes à assurer une identification à bref délai, ce qui est nécessaire, par exemple, pour des sources à détecter ayant une faible activité.

L'invention ne présente pas les inconvénients mentionnés ci-dessus.

Exposé de l'invention

En effet, l'invention concerne un procédé de détermination d'activité de N corps $CE_k$ (k=1, 2, ..., N) présents dans un matériel, à partir d'une succession d'impulsions numériques aptes à caractériser une activité d'au moins un des N corps, N étant un nombre entier supérieur ou égal à 1, caractérisé en ce qu'il comprend, pour une impulsion numérique de rang Q qui succède à une impulsion numérique de rang Q-1, les étapes suivantes mises en œuvre par un calculateur:

→ une estimation d'une donnée qui caractérise l'énergie de l'impulsion numérique de rang Q,
→ une identification d'un canal $C_i$ (i=1, 2, ..., M) auquel ladite donnée estimée appartient, chaque canal $C_i$ étant associé à une bande d'énergie différente, et
→ dès lors que le canal $C_i$ auquel ladite donnée estimée appartient est identifié, un calcul de l'activité $A_k^Q$ du corps $CE_k$ (k=1, 2, ..., N) pour l'impulsion numérique de rang Q sous la forme :

$$A_k^Q = A_k^{Q-1} + P\big(CE_k^Q\big|i\big),$$

$P\big(CE_k^Q\big|i\big)$ étant une probabilité estimée que l'impulsion numérique de rang Q correspond au corps $CE_k$ (k=1, 2, ..., N) telle que :

$$P\big(CE_k^Q\big|i\big) = \frac{P\big(CE_k^{Q-1}\big).w_{ik}}{\sum_1^N P\big(CE_j^{Q-1}\big).w_{ij}} \quad (k=1...N),$$

où

- $P\big(CE_k^{Q-1}\big)$ est une probabilité estimée de présence du corps $CE_k$ dans le matériel, telle que :

$$P\big(CE_k^{Q-1}\big) = \frac{A_k^{Q-1}}{\sum_1^N A_j^{Q-1}}$$

et

- $w_{ij}$ (i=1, 2, ..., M ; j = 1, 2, ..., N) est un poids synaptique associé au corps $CE_j$ pour le canal $C_i$,

une valeur initiale $A_k^0$ de l'activité de chaque corps $CE_k$ étant choisie a priori et une valeur initiale $P\big(CE_k^0\big)$ de la probabilité de présence de chaque corps $CE_k$ étant choisie a priori.

Par donnée qui caractérise l'énergie de l'impulsion numérique, il faut comprendre soit une donnée de mesure brute - sans étalonnage - telle que, par exemple, l'amplitude brute de l'impulsion ou l'aire brute que définit la courbe de l'impulsion, soit une donnée de mesure étalonnée qui est alors la valeur de l'énergie de l'impulsion.

Il apparaît clairement, à la lecture de la formule de la probabilité estimée $P\big(CE_k^{Q-1}\big)$ mentionnée ci-dessus, que cette probabilité, utilisée lors du traitement de l'impulsion de rang Q, résulte du traitement de l'ensemble des impulsions de rang 1 à Q-1 qui ont précédé l'impulsion de rang Q.

Selon un premier mode de réalisation de l'invention, lorsque N est supérieur ou égal à 2, les activités $A_k^Q$ sont calculées simultanément pour l'ensemble des N corps.

Selon un deuxième mode de réalisation de l'invention, lorsque N est supérieur ou égal à 2, les activités $A_k^Q$ sont calculées successivement pour chacun des corps.

L'invention concerne également un procédé d'identification de N corps présents dans un matériel, N étant un nombre entier supérieur ou égal à 1, caractérisé en ce qu'il comprend une étape de détermination d'activité de N corps conforme à l'invention et une étape de comparaison avec un seuil de l'activité $A_k^Q$, ou de la probabilité de présence $P\big(CE_k^Q\big)$ du corps $CE_k$ dans le matériel, ou d'une quantité égale à « $- \log(P\big(CE_k^Q\big|i\big))$ ».

Le corps $CE_k$ est identifié comme présent dans le matériel lorsque, respectivement, l'activité $A_k^Q$ ou la probabilité

$P(CE_k^Q)$ est supérieure à un seuil prédéterminé, ou lorsque la quantité « $-\log(P(CE_k^Q|i))$ » est inférieure à un seuil prédéterminé.

Selon une caractéristique supplémentaire de l'invention, entre l'étape de détermination d'activité de N corps et l'étape de comparaison, un critère de stabilité de l'activité $A_k^Q$, ou de la probabilité $P(CE_k^Q)$, ou de la quantité « $-\log(P(CE_k^Q|i))$ » est calculé et la comparaison n'est mise en œuvre que si le critère de stabilité est respecté.

Selon une autre caractéristique supplémentaire de l'invention, le critère de stabilité est la variance de l'activité $A_k^Q$, ou de la probabilité $P(CE_k^Q)$, ou de la quantité « $-\log(P(CE_k^Q|i))$ » et la comparaison n'est mise en œuvre que si la variance est inférieure à une valeur prédéterminée.

Selon encore une autre caractéristique supplémentaire de l'invention, la valeur initiale $A_k^0$ est choisie strictement supérieure à 0 et très inférieure à 1, par exemple une valeur comprise entre 0,01 et 0,05, et la valeur initiale $P(CE_k^0)$ est choisie égale à $N^{-1}$.

Selon encore une autre caractéristique supplémentaire de l'invention, préalablement à ladite estimation, une étape de suppression de bruit supprime un bruit présent entre deux impulsions numériques successives.

L'invention concerne également un dispositif de détermination d'activité de N corps $CE_k$ (k=1, 2, ..., N) présents dans un matériel à partir d'une succession d'impulsions numériques aptes à caractériser une activité d'au moins un des N corps, N étant un nombre entier supérieur ou égal à 1, caractérisé en ce qu'il comprend, pour une impulsion numérique de rang Q qui succède à une impulsion numérique de rang Q-1 :

→ des moyens d'estimation d'une donnée qui caractérise l'énergie de l'impulsion numérique de rang Q,
→ des moyens d'identification d'un canal $C_i$ (i=1, 2, ..., M) auquel ladite donnée estimée appartient, chaque canal $C_i$ étant associé à une bande d'énergie différente, et
→ des moyens de calcul qui, dès lors que le canal $C_i$ auquel ladite donnée estimée appartient est identifié, calculent l'activité $A_k^Q$ du corps $CE_k$ (k=1, 2, ..., N) pour l'impulsion numérique de rang Q sous la forme :

$$A_k^Q = A_k^{Q-1} + P(CE_k^Q|i),$$

$P(CE_k^Q|i)$ étant une probabilité estimée que l'impulsion numérique de rang Q correspond au corps $CE_k$ (k=1, 2, ..., N) telle que :

$$P(CE_k^Q|i) = \frac{P(CE_k^{Q-1}).w_{ik}}{\sum_1^N P(CE_j^{Q-1}).w_{ij}} \quad (k=1...N),$$

où

- $P(CE_k^{Q-1})$ est une probabilité estimée de présence du corps $CE_k$ dans le matériel, telle que :

$$P(CE_k^{Q-1}) = \frac{A_k^{Q-1}}{\sum_1^N A_j^{Q-1}}$$

- $w_{ij}$ (i=1, 2, ..., M ; j = 1, 2, ..., N) est un poids synaptique associé au corps $CE_j$ pour le canal $C_i$,

une valeur initiale $A_k^0$ de l'activité de chaque corps $CE_k$ étant choisie a priori et une valeur initiale $P(CE_k^0)$ de la probabilité de chaque corps $CE_k$ étant choisie a priori.

De même, l'invention concerne un dispositif d'identification de N corps présents dans un matériel qui comprend un dispositif de détermination d'activité de N corps conforme à l'invention et des moyens de comparaison avec un seuil de l'activité $A_k{}^Q$, ou de la probabilité $P(CE_k^Q)$, ou d'une quantité égale à « $-\log(P(CE_k^Q|i))$ ». Comme mentionné précédemment, le corps $CE_k$ est identifié comme présent dans le matériel lorsque, respectivement, l'activité $A_k{}^Q$ ou la probabilité $P(CE_k^Q)$ est supérieure à un seuil prédéfini, ou lorsque la quantité « $-\log(P(CE_k^Q|i))$ » est inférieure à un seuil prédéfini.

Selon une caractéristique supplémentaire de l'invention, des moyens de calcul calculent un critère de stabilité de l'activité $A_k{}^Q$, ou de la probabilité $P(CE_k^Q)$, ou de la quantité « $-\log(P(CE_k^Q|i))$ » de telle sorte que la comparaison n'est mise en œuvre que si le critère de stabilité est respecté.

Le critère de stabilité est, par exemple, la variance de l'activité $A_k{}^Q$, ou de la probabilité $P(CE_k^Q)$, ou de la quantité « $-\log(P(CE_k^Q|i))$ » et la comparaison n'est mise en œuvre que si la variance est inférieure à une valeur prédéterminée.

Dans un perfectionnement de l'invention, un circuit de suppression de bruit, situé en amont du circuit d'estimation, supprime un bruit présent entre deux impulsions numériques successives.

Les impulsions numériques qui sont traitées par le dispositif de détermination d'activité de corps de l'invention peuvent avantageusement être obtenues par différents processus.

Dans un premier cas, il peut s'agir d'impulsions numériques issues du rayonnement naturel ou activé d'un corps situé dans un matériel en observation (corps émissif). Un rayonnement naturel est, par exemple, le rayonnement gamma émis par un radionucléide.

Dans un deuxième cas, le rayonnement naturel ou activé peut avoir été préalablement enregistré et les impulsions numériques sont issues d'un circuit de mémoire.

Dans encore un autre cas, les impulsions numériques sont issues d'un spectre préalablement construit, lequel est alors converti en canaux d'énergie, par exemple par la méthode de Monte-Carlo. Dans ce dernier cas, les impulsions numériques peuvent provenir d'un spectre en absorption (cas des éléments chimiques qui absorbent des rayonnements infra-rouges et/ou ultra-violet).

De façon très avantageuse, le procédé de détermination d'activité de l'invention détermine l'activité des corps présents dans un matériel en temps quasiment réel par rapport au flux des impulsions qui se succèdent.

Un autre avantage du procédé de l'invention est qu'il n'est pas nécessaire que les détecteurs utilisés pour former les impulsions aient une haute résolution, alors même qu'il est possible d'identifier, quasiment en temps réel, les éléments qui constituent une mixture.

Encore un autre avantage du procédé de l'invention est de ne pas nécessiter une étape d'étalonnage du détecteur. Le procédé de l'invention permet avantageusement de prendre en compte la fonction de transfert du détecteur dans toute la bande d'énergie.

Dans le cadre de la présente invention, le bruit de fond, extérieur au matériel à caractériser (par exemple le rayonnement naturel de l'environnement), ou le rayonnement d'éléments inconnus (c'est-à-dire ceux ne correspondant à aucun des éléments à identifier), peut être assimilé à un corps $CE_k$ et traité comme tel. Dans ce dernier cas, de façon avantageuse, l'invention permet également de détecter la présence d'éléments inconnus ou une modification de l'environnement.

Brève description des figures

La figure 1 - déjà décrite - représente un schéma de principe de dispositif d'identification de corps selon l'art antérieur ;
La figure 2 représente un schéma de principe de dispositif d'identification de corps selon un premier mode de réalisation de l'invention ;
La figure 3 représente un exemple de dispositif d'identification de corps conforme au premier mode de réalisation de l'invention ;
La figure 4 illustre le procédé d'identification de corps selon le premier mode de réalisation de l'invention ;
La figure 5 représente un schéma de principe de dispositif d'identification de corps selon un deuxième mode de réalisation de l'invention ;

La figure 6 représente un exemple de dispositif d'identification de corps conforme au deuxième mode de réalisation de l'invention ;

La figure 7 illustre le procédé d'identification de corps selon le deuxième mode de réalisation de l'invention ;

La figure 8 représente un schéma de principe d'un perfectionnement mis en œuvre dans le cadre de l'invention.

Sur toutes les figures, les mêmes références désignent les mêmes éléments.

Exposé détaillé de modes de réalisation particuliers de l'invention

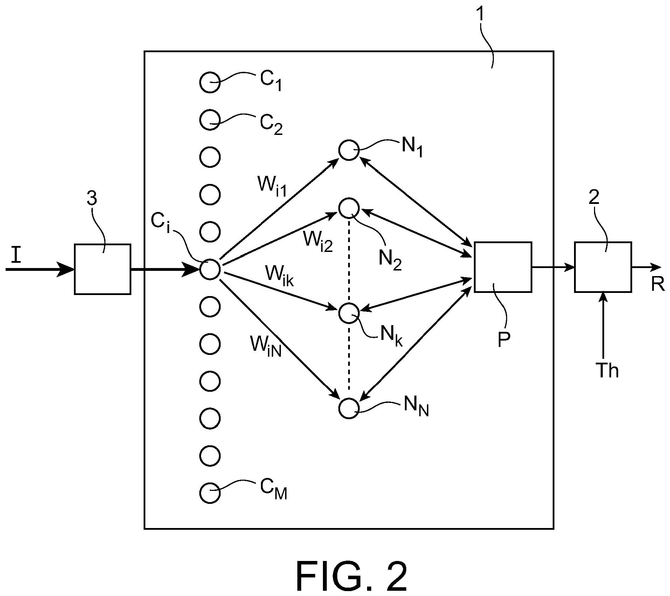

La figure 2 représente un schéma de principe de dispositif d'identification de corps selon un premier mode de réalisation de l'invention.

Le dispositif d'identification de corps comprend un dispositif de détermination d'activité de corps selon le premier mode de réalisation de l'invention et des moyens de comparaison.

Le dispositif de détermination d'activité de corps selon le premier mode de réalisation de l'invention comprend :

- un circuit 3 qui, d'une part, estime une donnée qui caractérise l'énergie de l'impulsion numérique I qu'il reçoit sur son entrée et, d'autre part, identifie un canal $C_i$ auquel cette donnée estimée appartient, et
- des moyens de calcul 1 qui comprennent un ensemble de M canaux d'entrée $C_i$ (i=1, 2, ..., M), une couche de N neurones $N_k$ (k=1, 2, ..., N) et un circuit P de calcul d'activité de corps.

Comme déjà mentionné précédemment, par « donnée qui caractérise l'énergie de l'impulsion numérique », il faut comprendre soit une donnée brute obtenue sans étalonnage, soit une donnée étalonnée qui est alors l'énergie de l'impulsion.

Chaque canal $C_i$ (i=1, 2, ..., M) correspond à une bande d'énergie différente d'un spectre d'énergie continu. Chaque neurone $N_k$ est associé à un corps $CE_k$ différent. Le nombre N de neurones est ainsi égal au nombre de corps que l'on cherche à identifier.

Dans le cadre de l'invention, les activités sont calculées à partir d'une succession d'impulsions, une impulsion de rang Q succédant à une impulsion de rang Q-1. A chaque neurone $N_k$ est ainsi associée une grandeur $A_k^Q$ qui est l'activité du corps $CE_k$ calculée pour l'impulsion de rang Q. Pour chaque corps, une valeur initiale d'activité $A_k^0$ est fixée avant que le procédé d'identification ne démarre. L'activité $A_k^0$ est strictement supérieure à 0 et petite par rapport à l'unité, par exemple, 0,01 ou 0,05.

Dès lors que le circuit 3 a estimé la donnée qui caractérise l'énergie de l'impulsion numérique et identifié le canal $C_i$ auquel cette donnée appartient, chaque neurone $N_k$ (k=1, 2, ..., N) reçoit le poids synaptique $w_{ik}$ correspondant.

Le poids synaptique $w_{ik}$ est, par définition, le poids attribué au corps $CE_k$ pour le canal d'énergie $C_i$. Le poids synaptique $w_{ik}$ est d'autant plus élevé que l'intensité émise ou absorbée par le corps $CE_k$ est élevée dans la bande d'énergie du canal $C_i$. Les poids synaptiques $w_{ik}$ (i=1, 2, ..., M ; j=1, 2, ..., k, ..., n) sont des données préenregistrées obtenues par apprentissage ou simple moyenne et normalisation, par exemple à partir d'un ou plusieurs spectres complets des différents corps que l'on souhaite identifier.

Lors de l'arrivée d'une première impulsion $I_1$, le canal $C_i$ qui lui correspond est activé. L'activité $A_k^1$ de chaque corps $CE_k$ est alors calculée par le circuit P.

Il vient :

$$A_k^1 = A_k^0 + P(CE_k^1|i),$$

avec

$$P(CE_k^1|i) = \frac{P(CE_k^0).w_{ik}}{\sum_1^N P(CE_k^0).w_{ij}}$$

La quantité $P(CE_k^1|i)$ est un facteur de pondération d'activité du neurone $N_k$. Ce facteur de pondération est la probabilité estimée que l'impulsion numérique de rang 1 correspond au corps $CE_k$.

La quantité $P(CE_k^0)$ est la probabilité initiale qui est associée à chaque corps $CE_k$. Sa valeur est par exemple égale à $N^{-1}$.

Suite au calcul de l'ensemble des activités $A_k{}^1$, le circuit P met à jour la probabilité estimée de présence du corps $CE_k$ dans le matériel $P(CE_k^1)$. Il vient :

$$P(CE_k^1) = \frac{A_k^1}{\sum_1^N A_j^1}$$

A chaque nouvelle impulsion détectée $I_Q$, les activités $A_k^Q$ (k=1, 2, ..., N) des différents corps $CE_k$ sont mises à jour conformément à l'équation ci-dessous :

$$A_k^Q = A_k^{Q-1} + P(CE_k^Q|i),$$

avec

$A_k^{Q-1}$ l'activité du corps $CE_k$ calculée pour l'impulsion de rang Q-1,

$$P(CE_k^Q|i) = \frac{P(CE_k^{Q-1}).w_{ik}}{\sum_1^N P(CE_j^{Q-1}).w_{ij}}$$

Suite à chaque mise à jour de l'ensemble des activités $A_k{}^Q$, le circuit P met à jour les probabilités $P(CE_k^Q)$ de présence de chaque corps $CE_k$ dans le matériel. Il vient :

$$P(CE_k^Q) = \frac{A_k^Q}{\sum_1^N A_j^Q}$$

De façon avantageuse, dans un délai très bref, un ensemble de valeurs d'activités aptes à valider ou non la présence des corps présents dans le matériel étudié est calculé.

Les valeurs d'activité $A_k{}^Q$ délivrées par les moyens de calcul 1 sont transmises en continu aux moyens de comparaison 2. Pour identifier la présence ou non d'un corps $CE_k$ dans le matériel, l'activité calculée $A_k{}^Q$ de ce corps est alors comparée à un seuil Th. Le seuil Th peut être une valeur fixe ou une valeur adaptative fonction de l'ensemble des N activités estimées. Si l'activité $A_k{}^Q$ est supérieure ou égale au seuil Th, il est conclu à la présence du corps $CE_k$. Sinon, le corps $CE_k$ n'est pas considéré comme étant présent dans le matériel étudié.

Dans un mode de réalisation préférentiel, l'étape d'identification par seuil est précédée d'une étape de définition d'un critère de stabilité des activités calculées. L'identification n'est alors mise en œuvre que si le critère de stabilité est respecté. Le critère de stabilité d'une activité est, par exemple, la variance des dernières valeurs de l'activité. Lorsque cette variance est faible, inférieure à une valeur prédéterminée, il est considéré que le système est stable et la comparaison au seuil Th peut être réalisée.

Dans d'autres variantes du procédé d'identification de l'invention, ce sont les probabilités $P(CE_k^Q)$ qui sont comparées à un seuil ou les quantités « - $\log(P(CE_k^Q|i))$ » qui sont comparées à un seuil.

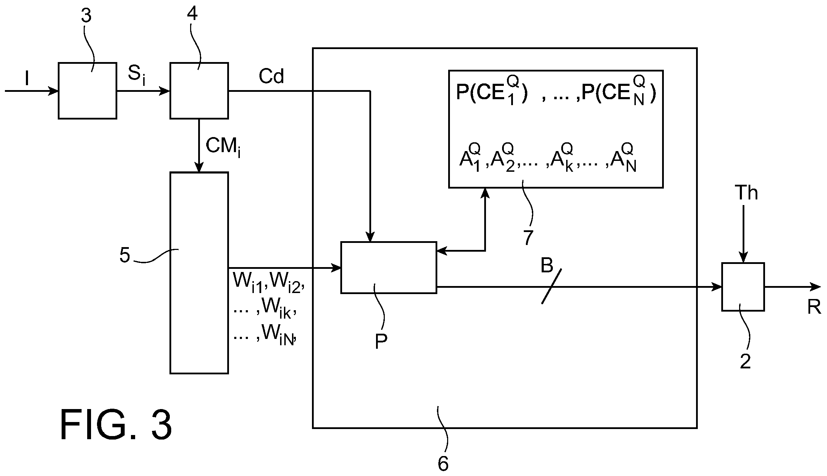

La figure 3 représente un exemple de dispositif d'identification de corps conforme au premier mode de réalisation de l'invention.

Le dispositif d'identification de corps comprend un circuit 3 d'estimation de donnée et d'identification de canal, une unité de contrôle 4, un circuit mémoire 5, un calculateur 6 et des moyens de comparaison 2. Le circuit mémoire 5 stocke l'ensemble des poids synaptiques $w_{ik}$ (i=1, 2, ..., M ; k=1, 2, ..., k, ..., N) associés aux N corps $CE_k$ (k=1, 2, ...,

k; ..., N). Le calculateur 6 comprend le circuit P de calcul d'activité de corps et un circuit mémoire 7. Le circuit mémoire 7 peut également être externe au calculateur 6. Lorsque le circuit mémoire est externe au calculateur, il peut être réalisé, par exemple, par le circuit mémoire 5 qui stocke les poids synaptiques.

Dès lors que le circuit 3 a estimé la donnée qui caractérise l'énergie de l'impulsion numérique et identifié le canal $C_i$ auquel cette donnée appartient, le circuit 3 délivre un signal $S_i$ qui caractérise le canal d'énergie $C_i$. Le signal $S_i$ est appliqué à l'unité de contrôle 4. Sous l'action du signal $S_i$, l'unité de contrôle 4 délivre un signal de commande $CM_i$ qui est appliqué au circuit de mémoire 5 et un signal de commande Cd qui est appliqué au circuit de calcul d'activité P.

Sous l'action du signal de commande $CM_i$, le circuit de mémoire 5 délivre successivement les poids synaptiques appropriés $w_{ij}$ en entrée du circuit de calcul P et, sous l'action du signal de commande Cd, le circuit de calcul P calcule successivement les activités $A_k^Q$ des différents corps conformément aux équations mentionnées précédemment.

Le circuit de mémoire 7 mémorise les différentes valeurs d'activité $A_k^Q$ qui sont calculées. Dès lors qu'un ensemble B de valeurs d'activités $A_1^Q$-$A_N^Q$ est calculé, le circuit de calcul P met à jour les valeurs des probabilités $P\left(CE_k^Q\right)$ et les mémorise également dans la mémoire 7. L'ensemble B de valeurs est transféré, via le circuit de calcul P, vers les moyens de comparaison 2. Comme cela a été mentionné précédemment, les moyens de comparaison 2 comparent les valeurs d'activité à un seuil Th et il est conclu à la présence ou à l'absence d'un corps en fonction de cette comparaison. Comme mentionné précédemment, dans d'autres variantes du procédé de l'invention, ce sont les valeurs des probabilités $P\left(CE_k^Q\right)$ ou les quantités « $-\log(P\left(CE_k^Q|i\right))$ qui sont comparées à un seuil pour conclure à la présence ou à l'absence du corps $CE_k$.

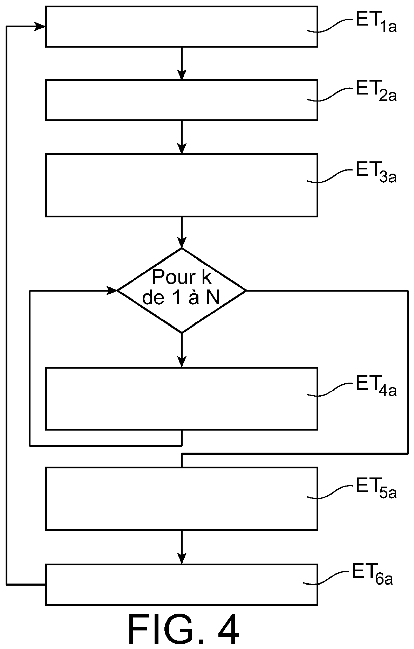

La figure 4 illustre le procédé d'identification de corps selon le premier mode de réalisation de l'invention.

A l'étape $ET_{1a}$, une impulsion est reçue par le circuit d'estimation 3. A une étape $ET_{2a}$ qui succède à l'étape $ET_{1a}$, la donnée qui caractérise l'énergie de l'impulsion reçue est estimée et le canal $C_i$ qui correspond à cette donnée est activé.

Un facteur de normalisation $S_{Pi}$ pour le calcul de la probabilité que l'impulsion de rang Q est caractéristique du corps $CE_k$ est alors calculé par le circuit P à l'étape $ET_{3a}$. Il vient :

$$S_{Pi} = \sum_1^N P\left(CE_j^{Q-1}\right).w_{ij}$$

L'étape $ET_{3a}$ est suivie d'une étape $ET_{4a}$ de calcul de l'activité des différents corps. Les activités des corps sont calculées successivement, par le circuit de calcul P, sur la base de l'incrémentation mentionnée précédemment, à savoir, pour le corps $CE_k$ relatif à l'impulsion numérique de rang Q :

$$A_k^Q = A_k^{Q-1} + P\left(CE_k^Q|i\right),$$

soit

$$A_k^Q = A_k^{Q-1} + \frac{P\left(CE_k^{Q-1}\right).w_{ik}}{S_{Pi}}$$

Une fois effectués les calculs d'activité pour tous les corps, l'ensemble des probabilités $P\left(CE_k^Q\right)$ est mis à jour à l'étape $ET_{5a}$ et l'identification des corps émissifs est effectuée à l'étape $ET_{6a}$ qui succède à $ET_{5a}$.

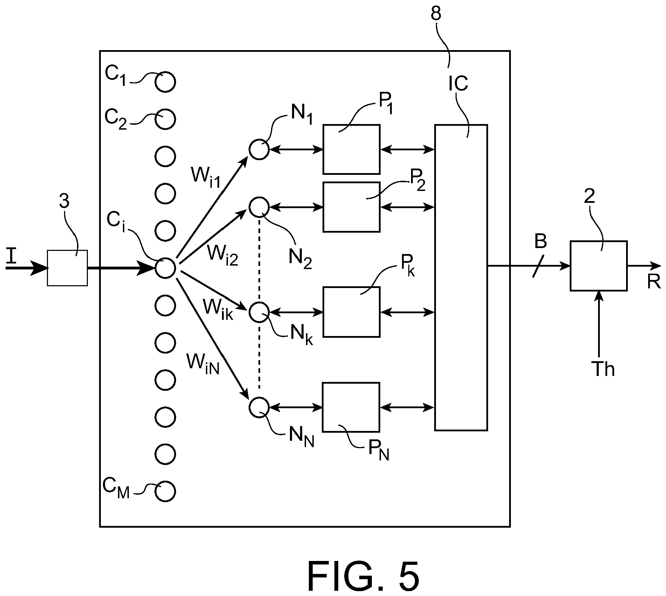

La figure 5 représente un schéma de principe de dispositif d'identification de corps selon un deuxième mode de réalisation de l'invention.

Le dispositif d'identification comprend un dispositif de détermination d'activité de corps selon le deuxième mode de réalisation de l'invention et des moyens de comparaison.

Le dispositif de détermination d'activité de corps selon le deuxième mode de réalisation de l'invention comprend :

- un circuit 3 qui, d'une part, estime une donnée qui caractérise l'énergie de l'impulsion numérique I qu'il reçoit sur son entrée et, d'autre part, identifie un canal $C_i$ auquel la donnée estimée appartient, et
- des moyens de calcul 8 qui comprennent un ensemble de M canaux d'entrée $C_i$ (i=1, 2, ..., M), une couche de N

neurones $N_k$ (k=1, 2, ..., N), N circuits de calcul d'activité de corps $P_k$ (k=1, 2, ..., N) et un circuit d'interconnexion IC.

Chaque canal $C_i$ (i=1, 2, ..., M) correspond à une bande d'énergie différente d'un spectre en énergie continu. Chaque neurone $N_k$, de même que chaque circuit $P_k$, est associé à un corps $CE_k$ différent. Le nombre N de neurones est égal au nombre de corps que l'on cherche à identifier.

Selon le deuxième mode de réalisation de l'invention, les différentes probabilités $P(CE_k|i)$ associées aux activités des différents corps $CE_k$ sont calculés simultanément et non successivement, comme c'est le cas dans le premier mode de réalisation. Il s'en suit que les activités des différents corps sont également calculées simultanément.

L'activité estimée $A_k^Q$ de chaque corps $CE_k$ qui est calculée par le circuit $P_k$ est transmise au circuit d'interconnexion IC, lequel transmet alors simultanément ou séquentiellement l'ensemble B de toutes les activités estimées $A_k^Q$ (k=1, 2, ..., k, ..., N) aux moyens de comparaison 2. Il est alors identifié - dans les conditions déjà précisées précédemment en référence au premier mode de réalisation de l'invention - quel(s) corps est (sont) présent(s) dans le matériel étudié (comparaison à un seuil des activités estimées $A_k^0$, ou des probabilités $P\!\left(CE_k^Q\right)$, ou des quantités « $-\log(P\!\left(CE_k^Q|i\right))$.

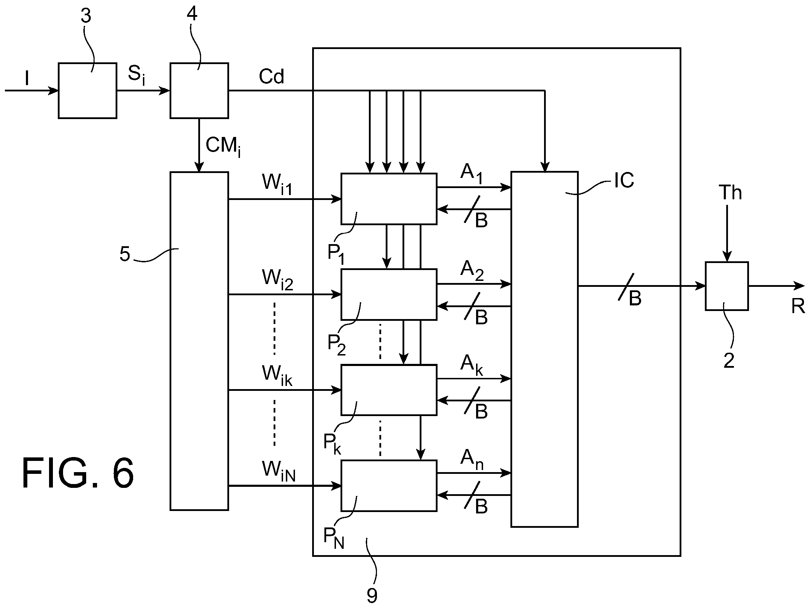

La figure 6 représente un exemple de dispositif d'identification de corps conforme au deuxième mode de réalisation de l'invention.

Le dispositif d'identification de corps comprend un circuit 3 d'estimation de donnée et d'identification de canal, une unité de contrôle 4, un circuit de mémoire 5, un calculateur 9 et des moyens de comparaison 2. Le calculateur 9 comprend les circuits $P_k$ de calcul d'activité de corps et le circuit d'interconnexion IC.

De même que précédemment, le circuit 3 a pour fonction d'estimer une donnée qui caractérise l'impulsion numérique reçue et de classer cette donnée estimée dans le canal d'énergie $C_i$ approprié. Le circuit de mémoire 5 stocke l'ensemble des poids synaptiques $w_{ik}$ (i=1, 2, ..., M ; k=1, 2, ..., k, ..., N) associés aux N corps $CE_k$ (k=1, 2, ..., k ; ..., N) dont la présence éventuelle est recherchée.

Lorsqu'une impulsion numérique I est reçue, le circuit 3 délivre un signal $S_i$ qui caractérise le canal $C_i$ auquel appartient la donnée qui caractérise l'impulsion. Le signal $S_i$ est appliqué en entrée de l'unité de contrôle 4. Sous l'action du signal $S_i$, l'unité de contrôle 4 délivre un signal de commande $CM_i$ qui est appliqué au circuit de mémoire 5 et un signal de commande Cd qui est appliqué à l'ensemble des circuits de calcul $P_k$ (k=1, 2, ..., N) et au circuit d'interconnexion IC.

Le circuit de mémoire 5 comprend N sorties, chaque sortie étant reliée à l'entrée d'un circuit de calcul $P_k$ différent. Sous l'action du signal de commande $CM_i$, le circuit de mémoire 5 délivre simultanément les N poids $w_{ik}$ (j=1, 2, ..., k, ..., N) en entrée des N neurones respectifs $P_k$ (k=1, 2, ..., N). Le poids $w_{ik}$ est ainsi une donnée d'entrée du neurone $P_k$.

Simultanément à l'émission du signal de commande $CM_i$, l'unité de contrôle 4 délivre une commande Cd à chaque circuit $P_k$ (k=1, 2, ..., N) et au circuit d'interconnexion IC. La commande Cd déclenche le calcul simultané, à partir des données de poids $w_{ik}$, des activités estimées $A_k^Q$ (k=1, 2, ..., N) des corps que l'on cherche à identifier, conformément à ce qui a été décrit précédemment en référence à la figure 5. Au fur et à mesure de la progression du procédé d'identification de l'invention, chaque ensemble B des valeurs d'activité $A_k^Q$ délivré par le circuit d'interconnexion IC est transmis aux moyens de comparaison 2. Il est alors identifié - dans les conditions déjà précisées précédemment - quel(s) corps est (sont) présent(s) dans le matériel étudié (comparaison à un seuil des activités estimées $A_k^0$, ou des probabilités $P\!\left(CE_k^Q\right)$, ou des quantités « $-\log(P\!\left(CE_k^Q|i\right))$.

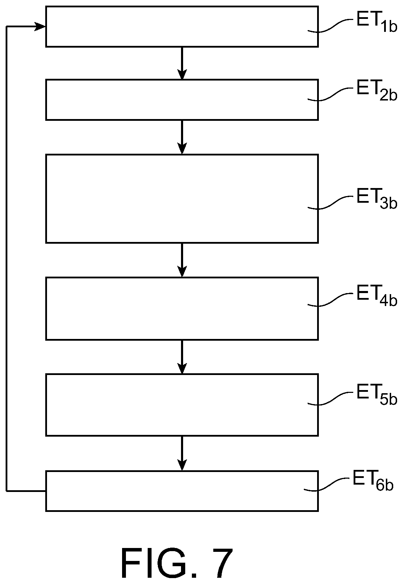

La figure 7 illustre le procédé d'identification de corps selon le deuxième mode de réalisation de l'invention.

A l'étape $ET_{1b}$, une impulsion est reçue par le circuit 3. A une étape $ET_{2b}$ qui succède à $ET_{1b}$, la donnée qui caractérise l'impulsion reçue est estimée et le canal $C_i$ qui correspond à l'énergie estimée est activé.

Le facteur de normalisation $S_{Pi}$ pour le calcul des probabilités est ensuite calculé à l'étape $ET_{3a}$ qui succède à l'étape $ET_{2a}$ :

$$S_{Pi} = \sum_{1}^{N} P\!\left(CE_j^{Q-1}\right).w_{ij}$$

L'étape $ET_{3b}$ est suivie d'une étape $ET_{4b}$ de calcul de l'activité de chaque corps. Les activités $A_k^Q$ des corps sont calculées simultanément, sur la base de l'incrémentation mentionnée précédemment, à savoir, pour le corps $CE_k$ :

$$A_k^Q = A_k^{Q-1} + P\big(CE_k^Q|i\big),$$

soit

$$A_k^Q = A_k^{Q-1} + \frac{P\big(CE_k^{Q-1}\big).\mathrm{w}_{ik}}{S_{Pi}}$$

Une fois effectués les calculs d'activité pour tous les corps, l'ensemble des probabilités $P\big(CE_k^Q\big)$ est mis à jour à une étape $E_{5b}$ et l'identification des corps est effectuée à l'étape $ET_{6b}$ qui succède à $ET_{5b}$.

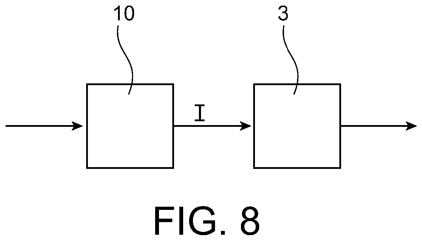

La figure 8 représente un schéma de principe d'un perfectionnement mis en œuvre dans le cadre de l'invention.

Selon le perfectionnement de l'invention, un circuit 10 apte à supprimer le bruit entre deux impulsions numériques qui se suivent est placé en amont du circuit 3.

De façon préférentielle, le circuit 10 met en œuvre le procédé d'extraction dynamique d'impulsions dans un signal bruité qui fait l'objet de la demande de brevet déposée en France, par la Demanderesse, en date du 23 Janvier 2014, sous le numéro d'enregistrement national N°1 450 568.

Le procédé objet de la demande de brevet N°1 450 568 est un procédé de traitement de signal temporel bruité qui présente un ensemble d'impulsions d'amplitude et de durée différentes, le procédé comprenant une étape de traitement du signal acquis par un détecteur pour détecter les impulsions, le traitement comprenant un filtrage du signal acquis par un filtre passe-haut et une comparaison du signal acquis filtré à un seuil pour détecter une impulsion lorsque le signal acquis filtré est supérieur au seuil, le seuil étant dynamiquement adapté au niveau de bruit affectant le signal acquis filtré.

Dans un premier mode de réalisation particulier, le procédé comprend le calcul d'un écart-type du bruit affectant le signal acquis filtré et l'adaptation dynamique du seuil en fonction de l'écart-type calculé.

Dans un deuxième mode de réalisation particulier, le calcul de l'écart-type du bruit affectant le signal acquis filtré comprend un lissage du signal acquis par un filtre passe-bas, le calcul d'un signal différentié par soustraction du signal lissé au signal acquis, un filtrage du signal différentié par le filtre passe-haut, et un calcul de l'écart-type du signal différentié filtré.

De façon préférentielle, le lissage du signal acquis est réalisé par un filtrage à moyenne mobile exponentielle et le filtrage passe-haut du signal acquis correspond au calcul d'une dérivée d'un signal acquis.

Dans un mode de réalisation particulier, le procédé objet de la demande de brevet N°1 450 568 comprend en outre, suite à la détection d'une impulsion, le suivi du signal acquis filtré pour déterminer la localisation du pic de l'impulsion et/ou l'identification de la durée séparant le pic de l'impulsion et une amplitude du signal acquis correspondant à un ratio prédéterminé de l'amplitude du pic de l'impulsion.

Aux fins de la mise en œuvre du procédé de traitement de signal temporel bruité mentionné ci-dessus, le circuit 10 comprend une unité de traitement configurée, d'une part, pour réaliser un filtrage du signal reçu à l'aide d'un filtre passe-haut et comparer le signal ainsi filtré à un seuil pour détecter une impulsion dès lors que le signal filtré est supérieur au seuil, et, d'autre part, pour adapter dynamiquement le seuil au niveau de bruit affectant le signal filtré.

**Revendications**

1. Procédé de détermination d'activité de N corps $CE_k$ (k=1, 2, ..., N) présents dans un matériel, à partir d'une succession d'impulsions numériques aptes à caractériser une activité d'au moins un des N corps, N étant un nombre entier supérieur ou égal à 1, **caractérisé en ce qu'**il comprend, pour une impulsion numérique de rang Q qui succède à une impulsion numérique de rang Q-1, les étapes suivantes mises en œuvre par un calculateur:

   → une estimation d'une donnée qui caractérise l'énergie de l'impulsion numérique de rang Q,
   → une identification d'un canal $C_i$ (i=1, 2, ..., M) auquel ladite donnée estimée appartient, chaque canal $C_i$ étant associé à une bande d'énergie différente, et
   → dès lors que le canal $C_i$ auquel ladite donnée appartient est identifié, un calcul de l'activité $A_k^Q$ du corps $CE_k$ (k=1, 2, ..., N) pour l'impulsion numérique de rang Q sous la forme :

$$A_k^Q = A_k^{Q-1} + P\left(CE_k^Q \middle| i\right),$$

$P\left(CE_k^Q \middle| i\right)$ étant une probabilité estimée que l'impulsion numérique de rang Q correspond au corps $CE_k$ (k=1, 2, ..., N) telle que :

$$P\left(CE_k^Q \middle| i\right) = \frac{P\left(CE_k^{Q-1}\right).w_{ik}}{\sum_1^N P\left(CE_j^{Q-1}\right).w_{ij}} \quad \text{(k=1...N)},$$

où

- $P(CE_k^{Q-1})$ est une probabilité estimée de présence du corps $CE_k$ dans le matériel telle que :

$$P\left(CE_k^{Q-1}\right) = \frac{A_k^{Q-1}}{\sum_1^N A_j^{Q-1}}$$

- $w_{ij}$ (i=1, 2, ..., M ; j = 1, 2, ..., N) est un poids synaptique associé au corps $CE_j$ pour le canal $C_i$,

une valeur initiale $A_k^0$ de l'activité de chaque corps $CE_k$ étant choisie a priori et une valeur initiale $P(CE_k^0)$ de la probabilité estimée de présence du corps $CE_k$ étant choisie a priori.

2. Procédé selon la revendication 1, dans lequel, lorsque N est supérieur ou égal à 2, les activités $A_k^Q$ sont calculées simultanément pour l'ensemble des N corps.

3. Procédé selon la revendication 1, dans lequel, lorsque N est supérieur ou égal à 2, les activités $A_k^Q$ sont calculées successivement pour chacun des corps.

4. Procédé d'identification de N corps présents dans un matériel, N étant un nombre entier supérieur ou égal à 1, **caractérisé en ce qu'**il comprend une étape de détermination d'activité de N corps conforme à l'une quelconque des revendications 1 à 3 et une étape de comparaison avec un seuil (Th) de l'activité $A_k^Q$, ou de la probabilité $P(CE_k^Q)$, ou d'une quantité égale à « - $\log(P\left(CE_k^Q \middle| i\right))$ » de telle sorte que le corps $CE_k$ est identifié comme présent dans le matériel dès lors que, respectivement, l'activité $A_k^Q$ ou la probabilité $P(CE_k^Q)$ est supérieure à un seuil prédéfini, ou la quantité «- $\log(P\left(CE_k^Q \middle| i\right))$» est inférieure à un seuil prédéfini.

5. Procédé selon la revendication 4, dans lequel, entre l'étape de détermination d'activité de N corps et l'étape de comparaison, un critère de stabilité de l'activité $A_k^Q$, ou de la probabilité $P(CE_k^Q)$, ou de la quantité « - $\log(P\left(CE_k^Q \middle| i\right))$» est calculé et la comparaison n'est mise en œuvre que si le critère de stabilité est respecté.

6. Procédé selon la revendication 5, dans lequel le critère de stabilité est la variance de l'activité $A_k^Q$, ou de la probabilité $P(CE_k^Q)$, ou de la quantité « - $\log(P(CE_k^Q)$ » et la comparaison n'est mise en œuvre que si la variance est inférieure à une valeur prédéterminée.

7. Procédé selon l'une quelconque des revendications précédentes, dans lequel la valeur initiale $A_k^0$ est choisie strictement supérieure à 0 et très inférieure à 1, notamment les valeurs comprises entre 0,01 et 0,05, et la valeur initiale $P\left(CE_k^0\right)$ est choisie égale à N$^{-1}$.

8. Procédé selon l'une quelconque des revendications précédentes, dans lequel, préalablement à ladite estimation, une étape de suppression de bruit supprime un bruit présent entre deux impulsions numériques successives.

9. Dispositif de détermination d'activité de N corps CE$_k$ (k=1, 2, ..., N) présents dans un matériel, à partir d'une succession d'impulsions numériques aptes à caractériser une activité d'au moins un des N corps, N étant un nombre entier supérieur ou égal à 1, **caractérisé en ce qu'**il comprend, pour une impulsion numérique de rang Q qui succède à une impulsion numérique de rang Q-1 :

→ des moyens d'estimation (3) d'une donnée qui caractérise l'énergie de l'impulsion numérique de rang Q,
→ des moyens d'identification (3) d'un canal C$_i$ (i=1, 2, ..., M) auquel la donnée qui caractérise l'impulsion numérique appartient, chaque canal C$_i$ étant associé à une bande d'énergie différente, et
→ des moyens de calcul (6) qui, dès lors que le canal C$_i$ auquel ladite donnée estimée appartient est identifié, calculent l'activité A$_k^Q$ du corps CE$_k$ (k=1, 2, ..., N) pour l'impulsion numérique de rang Q sous la forme :

$$A_k^Q = A_k^{Q-1} + P\left(CE_k^Q|i\right),$$

où $P\left(CE_k^Q|i\right)$ est une probabilité estimée que l'impulsion numérique de rang Q correspond au corps CE$_k$ (k=1, 2, ..., N) telle que :

$$P\left(CE_k^Q|i\right) = \frac{P\left(CE_k^{Q-1}\right).w_{ik}}{\sum_1^N P\left(CE_j^{Q-1}\right).w_{ij}} \quad (k=1...N),$$

où

- $P\left(CE_k^{Q-1}\right)$ est une probabilité estimée de présence du corps CE$_k$ dans le matériel telle que :

$$P\left(CE_k^{Q-1}\right) = \frac{A_k^{Q-1}}{\sum_1^N A_j^{Q-1}}$$

- $w_{ij}$ (i=1, 2, ..., M ; j = 1, 2, ..., N) est un poids synaptique associé au corps CE$_j$ pour le canal C$_i$,

une valeur initiale A$_k^0$ de l'activité de chaque corps CE$_k$ étant choisie a priori et une valeur initiale $P\left(CE_k^0\right)$ de la probabilité de chaque corps CE$_k$ étant choisie a priori.

10. Dispositif d'identification de N corps présents dans un matériel, **caractérisé en ce qu'**il comprend un dispositif de détermination d'activité de N corps conforme à la revendication 9 et des moyens de comparaison avec un seuil (Th) de l'activité A$_k^Q$, ou de la probabilité a priori $P\left(CE_k^Q\right)$, ou d'une quantité égale à « - $\log(P(CE_k^Q))$ » de telle sorte que le corps CE$_k$ est identifié comme présent dans le matériel dès lors que, respectivement, l'activité A$_k^Q$ ou la probabilité $P\left(CE_k^Q\right)$ est supérieure à un seuil prédéfini, ou la quantité «- $\log(P\left(CE_k^Q|i\right))$» est inférieure à un seuil prédéfini.

11. Dispositif selon la revendication 10, dans lequel des moyens de calcul calculent un critère de stabilité de l'activité A$_k^Q$, ou de la probabilité $P\left(CE_k^Q\right)$, ou de la quantité « - $\log(P\left(CE_k^Q|i\right))$» de telle sorte que la comparaison n'est mise en œuvre que si le critère de stabilité est respecté.

**12.** Dispositif selon la revendication 11, dans lequel le critère de stabilité est la variance de l'activité $A_k{}^Q$, ou de la probabilité $P(CE_k^Q)$, ou de la quantité « $-\log(P(CE_k^Q|i))$ » et la comparaison n'est mise en œuvre que si la variance est inférieure à une valeur prédéterminée.

**13.** Dispositif selon l'une quelconque des revendications 9 à 12, dans lequel la valeur initiale $A_k{}^0$ est choisie strictement supérieure à 0 et très inférieure à 1, notamment les valeurs comprises entre 0,01 et 0,05, et la valeur initiale $P(CE_k^0)$ est choisie égale à N⁻¹.

**14.** Dispositif selon l'une quelconque des revendications 9 à 13 et qui comprend, en amont desdits moyens d'estimation (3), un circuit de suppression de bruit (10) qui supprime un bruit présent entre deux impulsions numériques successives.

**Patentansprüche**

**1.** Verfahren zur Bestimmung der Aktivität von N Körpern $CE_k$ (k = 1, 2, ..., N), die in einem Material vorhanden sind, und zwar ausgehend von einer Abfolge von digitalen Impulsen, die zur Kennzeichnung einer Aktivität mindestens eines der N Körper geeignet sind, wobei N eine Ganzzahl größer oder gleich 1 ist, **dadurch gekennzeichnet, dass** es für einen digitalen Impuls der Abfolgestelle Q, der auf einen digitalen Impuls der Abfolgestelle Q-1 folgt, die folgenden durch einen Rechner durchgeführten Schritte umfasst:

Schätzen eines Datums, das die Energie des digitalen Impulses der Abfolgestelle Q kennzeichnet,
Identifizieren eines Kanals $C_i$ (i = 1, 2, ..., M), zu dem das geschätzte Datum gehört, wobei jeder Kanal $C_i$ zu einem unterschiedlichen Energieband gehört, und
sobald der Kanal $C_i$, zu dem dieses Datum gehört, identifiziert wurde, Berechnen der Aktivität $A_k{}^Q$ des Körpers $CE_k$ (k = 1, 2, ..., N) für den digitalen Impuls der Abfolgestelle Q in folgender Form:

$$A_k^Q = A_k^{Q-1} + P(CE_k^Q|i),$$

wobei $P(CE_k^Q|i)$ eine geschätzte Wahrscheinlichkeit ist, dass der digitale Impuls der Abfolgestelle Q dem Körper $CE_k$ (k = 1, 2, ..., N) entspricht, derart, dass:

$$P(CE_k^Q|i) = \frac{P(CE_k^{Q-1}) \cdot w_{ik}}{\sum_1^N P(CE_j^{Q-1}) \cdot w_{ij}} \quad (k=1...N) \,,$$

wobei

$P(CE_k^{Q-1})$ eine geschätzte Wahrscheinlichkeit eines Vorhandenseins des Körpers $CE_k$ in dem Material ist, derart, dass:

$$P(CE_k^{Q-1}) = \frac{A_k^{Q-1}}{\sum_1^N A_j^{Q-1}}$$

$w_{ij}$ (i = 1, 2, ..., M); j = 1, 2, ..., N) eine zum Körper $CE_j$ gehörige synaptische Gewichtung für den Kanal $C_i$ ist,

wobei ein Anfangswert $A_k{}^0$ der Aktivität eines jeden Körpers $CE_k$ vorab gewählt wird und ein Anfangswert $P\left(CE_k^0\right)$ der geschätzten Wahrscheinlichkeit eines Vorhandenseins des Körpers $CE_k$ vorab gewählt wird.

2. Verfahren nach Anspruch 1, bei dem, wenn N größer oder gleich 2 ist, die Aktivitäten $A_k^Q$ für die Gesamtheit der N Körper gleichzeitig berechnet werden.

3. Verfahren nach Anspruch 1, bei dem, wenn N größer oder gleich 2 ist, die Aktivitäten $A_k^Q$ nacheinander für jeden der Körper berechnet werden.

4. Verfahren zur Identifizierung von N Körpern, die in einem Material vorhanden sind, wobei N eine Ganzzahl größer oder gleich 1 ist, **dadurch gekennzeichnet, dass** es einen Schritt einer Bestimmung einer Aktivität von N Körpern nach einem der Ansprüche 1 bis 3 und einen Schritt eines Vergleichs mit einem Schwellenwert (Th) der Aktivität $A_k^Q$, oder der Wahrscheinlichkeit $P\left(CE_k^Q\right)$, oder einer Größe entsprechend $\ll - \log(P\left(CE_k^Q|i\right)) \gg$ beinhaltet, derart, dass der Körper $CE_k$ als in dem Material vorhanden identifiziert wird, sobald die Aktivität $A_k^Q$ bzw. die Wahrscheinlichkeit $P\left(CE_k^Q\right)$ größer als ein vordefinierter Schwellenwert ist, oder der Größenwert von $\ll - \log(P\left(CE_k^Q|i\right)) \gg$ kleiner als ein vordefinierter Schwellenwert ist.

5. Verfahren nach Anspruch 4, bei dem, zwischen dem Schritt einer Bestimmung einer Aktivität von N Körpern und dem Schritt eines Vergleichens, ein Stabilitätskriterium der Aktivität $A_k^Q$, oder der Wahrscheinlichkeit $P\left(CE_k^Q\right)$, oder des Größenwertes von $\ll - \log(P\left(CE_k^Q|i\right)) \gg$ berechnet wird, und der Vergleich nur dann durchgeführt wird, wenn das Stabilitätskriterium erfüllt ist.

6. Verfahren nach Anspruch 5, bei dem das Stabilitätskriterium die Varianz der Aktivität $A_k^Q$, oder der Wahrscheinlichkeit $P\left(CE_k^Q\right)$, oder des Größenwertes von $\ll - \log(\mathrm{P}(CE_k^Q) \gg$ ist, und der Vergleich nur dann durchgeführt wird, wenn die Varianz kleiner als ein vorbestimmter Wert ist.

7. Verfahren nach einem der vorhergehenden Ansprüche, bei dem der Anfangswert $A_k^0$ strikt oberhalb 0 und sehr weit unterhalb 1 gewählt wird, und zwar insbesondere die Werte zwischen 0,01 und 0,05, und der Anfangswert $P\left(CE_k^0\right)$ zu $N^{-1}$ gewählt wird.

8. Verfahren nach einem der vorhergehenden Ansprüche, bei dem vorhergehend zu dieser Schätzung durch einen Schritt einer Rauschunterdrückung ein Rauschen unterdrückt wird, das zwischen zwei aufeinanderfolgenden digitalen Impulsen vorhanden ist.

9. Vorrichtung zur Bestimmung der Aktivität von N Körpern $CE_k$ (k = 1, 2, ..., N), die in einem Material vorhanden sind, und zwar ausgehend von einer Abfolge von digitalen Impulsen, die zur Kennzeichnung einer Aktivität mindestens eines der N Körper geeignet sind, wobei N eine Ganzzahl größer oder gleich 1 ist, **dadurch gekennzeichnet, dass** sie für einen digitalen Impuls der Abfolgestelle Q, der auf einen digitalen Impuls der Abfolgestelle Q-1 folgt, aufweist:

> eine Einrichtung zur Schätzung (3) eines Datums, das die Energie eines digitalen Impulses einer Abfolgestelle Q kennzeichnet,
> eine Einrichtung zur Identifikation (3) eines Kanals $C_i$ (i = 1, 2, ..., M), zu dem das Datum gehört, welches den digitalen Impuls kennzeichnet, wobei jeder Kanal $C_i$ zu einem unterschiedlichen Energieband gehört, und
> eine Einrichtung zur Berechnung (6), die, sobald der Kanal $C_i$ identifiziert wurde, zu dem das geschätzte Datum gehört, die Aktivität $A_k^Q$ des Körpers $CE_k$ (k = 1, 2, ..., N) für den digitalen Impuls der Abfolgestelle Q berechnet, und zwar in der Form:

$$A_k^{Q} = A_k^{Q-1} + P\big(CE_k^{Q}\,\big|\,i\big),$$

wobei

$P\big(CE_k^{Q}\,\big|\,i\big)$ eine geschätzte Wahrscheinlichkeit ist, dass der digitale Impuls derAbfolgestelle Q dem Körper $CE_k$ (k = 1, 2, ..., N) entspricht, derart, dass:

$$P\big(CE_k^{Q}\,\big|\,i\big) = \frac{P\big(CE_k^{Q-1}\big).\mathrm{w}_{ik}}{\sum_1^N P\big(CE_j^{Q-1}\big).\mathrm{w}_{ij}} \quad (k=1...N),$$

wobei

$P(CE_k^{Q-1})$ eine geschätzte Wahrscheinlichkeit eines Vorhandenseins des Körpers $CE_k$ in dem Material ist, derart, dass:

$$P\big(CE_k^{Q-1}\big) = \frac{A_k^{Q-1}}{\sum_1^N A_j^{Q-1}}$$

$w_{ij}$ (i = 1, 2, ..., M); j = 1, 2, ..., N) eine zum Körper $CE_j$ gehörige synaptische Gewichtung für den Kanal $C_i$ ist, wobei ein Anfangswert $A_k^0$ der Aktivität eines jeden Körpers $CE_k$ vorab gewählt wird und ein Anfangswert $P(CE_k^0)$ der Wahrscheinlichkeit eines jeden Körpers $CE_k$ vorab gewählt wird.

10. Vorrichtung zum Identifizieren von N Körpern, die in einem Material vorhanden sind, **dadurch gekennzeichnet, dass** sie aufweist: eine Vorrichtung zur Bestimmung einer Aktivität von N Körpern nach Anspruch 9 und eine Einrichtung zum Vergleichen mit einem Schwellenwert (Th) der Aktivität $A_k^Q$, oder der Wahrscheinlichkeit $P(CE_k^{Q})$, oder einer Größe entsprechend « - $\log(P(CE_k^{Q})$ » beinhaltet, derart, dass der Körper $CE_k$ als in dem Material vorhanden identifiziert wird, sobald die Aktivität $A_k^Q$ bzw. die Wahrscheinlichkeit $P(CE_k^{Q})$ größer als ein vordefinierter Schwellenwert ist, oder der Größenwert von « - $\log(P(CE_k^{Q}\,|\,i))$ » kleiner als ein vordefinierter Schwellenwert ist.

11. Vorrichtung nach Anspruch 10, bei der die Einrichtung zur Berechnung berechnet: ein Stabilitätskriterium der Aktivität $A_k^Q$, oder der Wahrscheinlichkeit $P(CE_k^{Q})$, oder des Größenwertes von « - $\log(P(CE_k^{Q}\,|\,i))$ », derart, dass der Vergleich nur dann durchgeführt wird, wenn das Stabilitätskriterium erfüllt ist.

12. Vorrichtung nach Anspruch 11, bei der das Stabilitätskriterium die Varianz der Aktivität $A_k^Q$, oder der Wahrscheinlichkeit $P(CE_k^{Q})$, oder des Größenwertes von « - $\log(P(CE_k^{Q}\,|\,i))$ » ist, und der Vergleich nur dann durchgeführt wird, wenn die Varianz kleiner als ein vorbestimmter Wert ist.

13. Vorrichtung nach einem der Ansprüche 9 bis 12, bei welcher der Anfangswert $A_k^0$ strikt oberhalb 0 und sehr weit unterhalb 1 gewählt wird, und zwar insbesondere die Werte zwischen 0,01 und 0,05, und der Anfangswert $P(CE_k^0)$

zu $N^{-1}$ gewählt wird.

**14.** Vorrichtung nach einem der Ansprüche 9 bis 13, die, der Einrichtung zur Schätzung (3) vorgeschaltet, eine Rauschunterdrückungsschaltung (10) aufweist, die ein Rauschen unterdrückt, das zwischen zwei aufeinanderfolgenden digitalen Impulsen vorhanden ist.

**Claims**

**1.** A method for determining the activity of N bodies $CE_k$ (k=1, 2, ..., N) present in a piece of equipment, from a succession of digital pulses capable of characterising an activity of at least one of the N bodies, N being an integer greater than or equal to 1, **characterised in that** it comprises, for a digital pulse of rank Q which follows a digital pulse of rank Q-1, the following steps implemented by a calculator:

→ estimating a datum which characterises the energy of the digital pulse of rank Q,
→ identifying a channel $C_i$ (i=1, 2, ..., M) to which said estimated datum belongs, each channel $C_i$ being associated with a different energy band, and
→ as soon as the channel $C_i$ to which said datum belongs is identified, calculating the activity $A_K^Q$ of the body $CE_k$ (k=1, 2, ..., N) for the digital pulse of rank Q in the form:

$$A_k^Q = A_k^{Q-1} + P\big(CE_k^Q\big|i\big),$$

$P\big(CE_k^Q\big|i\big)$ being an estimated probability that the digital pulse of rank Q corresponds to the body $CE_k$ (k=1, 2, ..., N) such that:

$$P(CE_k^Q\big|i) = \frac{P\big(CE_k^{Q-1}\big)\cdot w_{ik}}{\sum_1^N P\big(CE_j^{Q-1}\big)\cdot w_{ij}} \ (k=1...N),$$

where

- $P\big(CE_k^{Q-1}\big)$ is an estimated probability of the presence of the body $CE_k$ in the piece of equipment such that:

$$P\big(CE_k^{Q-1}\big) = \frac{A_k^{Q-1}}{\sum_1^N A_j^{Q-1}}$$

- $w_{ij}$ (i=1, 2, ..., M; j = 1, 2, ..., N) is a synaptic weight associated with the body $CE_j$ for the channel $C_i$,

an initial value $A_k^0$ of the activity of each body $CE_k$ being selected a priori and an initial value $P\big(CE_k^0\big)$ of the estimated probability of presence of the body $CE_k$ being selected a priori.

**2.** The method according to claim 1, wherein, when N is greater than or equal to 2, the activities $A_k^Q$ are calculated simultaneously for all the N bodies.

**3.** The method according to claim 1, wherein, when N is greater than or equal to 2, the activities $A_k^Q$ are calculated successively for each of the bodies.

**4.** A method for identifying N bodies present in a piece of equipment, N being an integer greater than or equal to 1, **characterised in that** it comprises a step of determining the activity of N bodies according to any one of claims 1 to 3 and a step of comparing the activity $A_k{}^Q$, or the probability $P\left(CE_k^Q\right)$, or a quantity equal to $"-log(P\left(CE_k^Q|i\right))"$ with a threshold (Th) such that the body $CE_k$ is identified as present in the piece of equipment when, respectively, the activity $A_k{}^Q$ or the probability $P\left(CE_k^Q\right)$ is greater than a predefined threshold, or the quantity $"-log(P\left(CE_k^Q|i\right))"$ is less than a predefined threshold.

5. The method according to claim 4, wherein, between the step of determining the activity of N bodies and the comparison step, a criterion of stability of the activity $A_k{}^Q$, or of the probability $P\left(CE_k^Q\right)$, or the quantity $"-log(P\left(CE_k^Q|i\right))"$ is calculated and the comparison is only implemented if the stability criterion is respected.

6. The method according to claim 5, wherein the stability criterion is the variance of the activity $A_k{}^Q$, or of the probability $P\left(CE_k^Q\right)$, or of the quantity $"-log\left(P(CE_k^Q)\right)"$ and the comparison is implemented only if the variance is less than a predetermined value.

7. The method according to any one of the preceding claims, wherein the initial value $A_k{}^0$ is selected strictly greater than 0 and very much less than 1, in particular the values comprised between 0.01 and 0.05, and the initial value $P\left(CE_k^0\right)$ is selected equal to $N^{-1}$.

8. The method according to any one of the preceding claims, wherein, prior to said estimation, a noise suppression step suppresses noise present between two successive digital pulses.

9. A device for determining the activity of N bodies $CE_k$ (k=1, 2, ..., N) present in a piece of equipment, from a succession of digital pulses capable of characterising an activity of at least one of the N bodies, N being an integer greater than or equal to 1, **characterised in that** it comprises, for a digital pulse of rank Q which follows a digital pulse of rank Q-1:

   → means (3) for estimating a datum which characterises the energy of the digital pulse of rank Q,
   → means (3) for identifying a channel $C_i$ (i=1, 2, ..., M) to which the datum which characterises the digital pulse belongs, each channel $C_i$ being associated with a different energy band, and
   → calculation means (6) which, once the channel $C_i$ to which said estimated datum belongs is identified, calculate the activity $A_k{}^Q$ of the body $CE_k$ (k=1, 2, ..., N) for the digital pulse of rank Q in the form:

$$A_k^Q = A_k^{Q-1} + P\left(CE_k^Q|i\right),$$

   where $P\left(CE_k^Q|i\right)$ being an estimated probability that the digital pulse of rank Q corresponds to the body $CE_k$ (k=1, 2, ..., N) such that:

$$P(CE_k^Q|i) = \frac{P\left(CE_k^{Q-1}\right).w_{ik}}{\sum_1^N P\left(CE_j^{Q-1}\right).w_{ij}} \text{ (k=1...N),}$$

   where

   ▪ $P\left(CE_k^{Q-1}\right)$ is an estimated probability of the presence of the body $CE_k$ in the piece of equipment such that:

$$p\left(CE_k^{Q-1}\right) = \frac{A_k^{Q-1}}{\sum_1^N A_j^{Q-1}}$$

- $w_{ij}$ (i=1, 2, ..., M; j = 1, 2, ..., N) is a synaptic weight associated with the body $CE_j$ for the channel $C_i$,

an initial value $A_k^0$ of the activity of each body $CE_k$ being selected a priori and an initial value $P\left(CE_k^0\right)$ of the probability of each body $CE_k$ being selected a priori.

10. A device for identifying N bodies present in a piece of equipment, **characterised in that** it comprises a device for determining the activity of N bodies in accordance with claim 9 and means for comparing the activity $A_k^Q$, or the a priori probability $P\left(CE_k^Q\right)$, or a quantity equal to $"-log\left(P(CE_k^Q)\right)"$ with a threshold (Th) such that the body $CE_k$ is identified as present in the piece of equipment when, respectively, the activity $A_k^Q$ or the probability $P\left(CE_k^Q\right)$ is greater than a predefined threshold, or the quantity $"-log(P\left(CE_k^Q|i\right))"$ is less than a predefined threshold.

11. The device according to claim 10, wherein calculation means calculate a stability criterion of the activity $A_k^Q$, or of the probability $P\left(CE_k^Q\right)$ or of the quantity $"-log(P(CE_k^Q|i))"$ such that the comparison is only implemented if the stability criterion is respected.

12. The device according to claim 11, wherein the stability criterion is the variance of the activity $A_k^Q$, or of the probability $P\left(CE_k^Q\right)$, or of the quantity $"-log(P(CE_k^Q|i))"$ and the comparison is only implemented if the variance is less than a predetermined value.

13. The device according to any one of claims 9 to 12, wherein the initial value $A_k^0$ is selected strictly greater than 0 and much less than 1, in particular the values comprised between 0.01 and 0.05, and the initial value $P\left(CE_k^0\right)$ is selected equal to $N^{-1}$.

14. The device according to any one of claims 9 to 13 and which comprises, upstream of said estimation means (3), a noise suppression circuit (10) which suppresses a noise present between two successive digital pulses.

## FIG. 1

# FIG. 2

FIG. 3

FIG. 4

FIG. 5

FIG. 6

EP 3 286 582 B1

FIG. 7

10    3

I

FIG. 8

## RÉFÉRENCES CITÉES DANS LA DESCRIPTION

**Documents brevets cités dans la description**

- WO 2014133687 A
- FR 1450568

- WO 1450568 A

**Littérature non-brevet citée dans la description**

- Radio-isotope identification algorithms for Nal spectra. *Algorithms,* 2009, vol. 2 (1), 339-360

- Nuclear Spectral analysis via artificial neural networks for waste handling. *Nuclear Science, IEEE Transactions on,* 1995, vol. 42 (4), 709-715